# EUROPÄISCHE PATENTANMELDUNG

(11) **EP 1 139 559 A1**
(43) Veröffentlichungstag der Anmeldung: **04.10.2001**
(21) Anmeldenummer: 01106647.9
(22) Anmeldetag: 16.03.2001
(51) Int. Cl.: H02P 6/16

(54) **Drehzahlsteuerbarer Drehstrommotor zum Betrieb an einem Frequenzumrichter**

(30) Priorität: 16.03.2000 DE 10012799
(71) Anmelder: Lenze GmbH & Co. KG, 31855 Aerzen (DE)
(72) Erfinder: Tieste, Karl-Dieter, Dr., 30169 Hannover (DE); Kiel, Edwin, Dr., 31787 Hameln (DE); Fräger, Carsten, Dr., 31787 Hameln (DE)
(74) Vertreter: Elbertzhagen, Otto, Dipl.-Ing.

(57) **Zusammenfassung**

Für den Frequenzumrichter, der mit dem Drehstrommotor zusammengeschaltet wird, sind der Motortyp sowie die Motordaten automatisch erkennbar zu machen. Daher weist der Drehstrommotor einen Speicherbaustein auf, in welchem die für den Umrichter relevanten Motordaten abgelegt sind, und der hat Umrichter eine Datenauswerteinheit, die zum Auslesen des Speicherbausteins mit dem Motor über eine Datenleitung verbunden ist.

## Beschreibung

Die Erfindung bezieht sich auf einen drehzahlsteuerbaren Drehstrommotor der im Gattungsbegriff des Patentanspruchs 1 bezeichneten Art.

Zum Betrieb eines Drehstrommotors an einem Frequenzumrichter müssen die beiden Antriebskomponenten nicht nur zueinander passen, es muß vielmehr der Frequenzumrichter auf die Daten der angeschlossenen Drehstrommaschine abgestimmt werden. Dies gilt vor allem für den Betrieb von Motoren an Servoumrichtern, um nicht nur die Drehzahl des Motors exakt einstellen, sondern auch die Rotorlage im Stillstand genau erfassen zu können. Bisher hat man bei der Zusammenstellung eines Drehstrommotors und eines dazu passenden Frequenzumrichters die Motordaten manuell in der Konfiguration des Servoumrichters eingetragen. Ein einfaches Zusammenschalten von Motor und Umrichter im Sinne von "Plug & Play" war bislang nicht möglich.

Aufgabe der Erfindung ist es deshalb, für den mit einem Drehstrommotor zusammenzuschaltenden Frequenzumrichter den Motortyp sowie die Motordaten automatisch erkennbar zu machen, also am Motor ein sogenanntes "elektronisches Typenschild" anzubringen, welches der Umrichter sozusagen "lesen" kann.

Diese Aufgabe wird bei einem drehzahlsteuerbaren Drehstrommotor der gattungsgemäßen Art durch die kennzeichnenden Merkmale des Patentanspruchs 1 gelöst.

Für die Erfindung ist wesentlich, daß sich bei dem elektrischen Zusammenschalten von Frequenzumrichter und Drehstrommotor der Umrichter die Daten zur Anpassung an den jeweiligen Motor selbsttätig beschafft, womit eine manuelle Eingabe der Motordaten in die Konfiguration des Servoumrichters entfällt. Grundsätzlich können in dem durch den Speicherbaustein im Motor bestehenden elektronischen Typenschild weitere Daten gespeichert werden, wie Seriennummer, Fertigungsdaten oder Abgleichwerte. Eine vorteilhafte Weiterbildung der Erfindung besteht darin, bei einem über einen Servoumrichter gesteuerten Motor eine separate Datenleitung für das Auslesen des Speicherbausteins im Motor entfallen zu lassen.

Weitere vorteilhafte Ausgestaltungsmerkmale der Erfindung ergeben sich aus den Unteransprüchen.

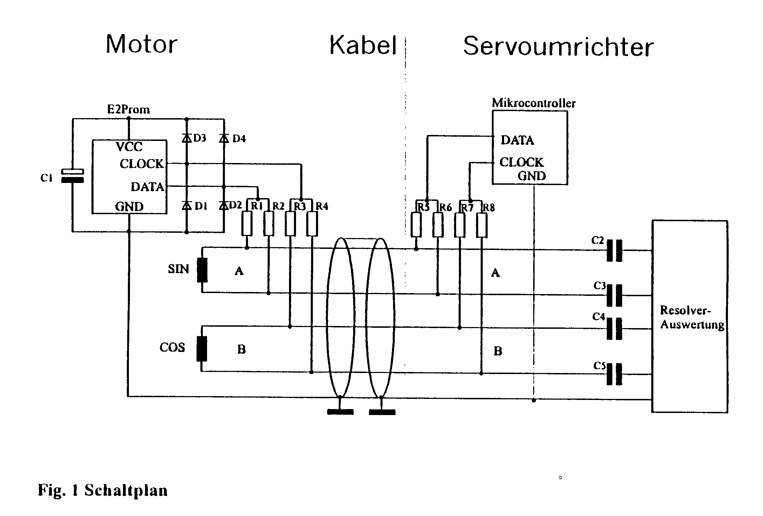

Die Erfindung wird nachfolgend anhand der Zeichnung an einem Ausführungsbeispiel noch näher erläutert. Die Zeichnung zeigt einen Schaltplan mit denjenigen Bauteilen, die das elektronische Typenschild an einem Drehstrommotor, die zugehörigen Auswertvorrichtung am Umrichter sowie die verbindenden Datenleitungen am Beispiel eines an einem Servoumrichter betriebenen Servomotors umfassen.

Bei einem solchen Servomotor ist in den elektrisch-magnetischen Kreis ein Resolver integriert, bei dem es sich um einen Transformator mit drei Wicklungen handelt. Die Primärwicklung wird mit einer Wechselspannung versorgt, und aus den Spannungen der beiden Sekundärwicklungen A und B wird in einer Resolver-Auswerteinheit der zu messende Resolverwinkel, also die jeweilige Rotorlage, berechnet. Die Spannungen der Sekundärwicklungen A und B werden jeweils als gleichspannungsfreies Differenzsignal über ein Leitungspaar der Resolver-Signalleitung geführt. Die Resolver-Auswerteinheit ist in den Servoumrichter integriert, über den die Drehzahlsteuerung und -stellung des Motors erfolgt.

In den Motor ist ein elektronisches Typenschild, nämlich ein programmierbarer Speicherbaustein eingebaut. Es handelt sich um ein serielles E2Prom, in welchem diejenigen Informationen abgespeichert sind, die der Servoumrichter zum Betrieb des Motors benötigt. Das Auslesen der im E2Prom gespeicherten Daten erfolgt mittels einer Datenauswerteinheit, die in den Umrichter integriert ist. Bei der Datenauswerteinheit handelt es sich um eine Mikrocontroller, der mit dem E2Prom als programmierbarem Speicherbaustein kommuniziert. Die Kommunikation zwischen dem E2Prom und dem Mikrocontroller erfolgt über die Resolver-Signalleitungen, so daß hierfür eine separate Datenleitung nicht erforderlich ist.

Die Signale CLOCK und DATA des E2Proms, also des elektronischen Typenschildes, werden als Summensignal über die Leitungspaare A und B der Resolver-Signalleitung geführt.

Durch die Verwendung dieses Summensignals für die Datensignale und durch die Verwendung des Differenzsignals für die Resolver-Signale beeinflussen sich Resolver und elektronisches Typenschild nicht.

Die Spannungsversorgung des E2Proms kann unterschiedlich vorgenommen werden. Zum einen ist eine Speisung durch Gleichrichtung der Resolver-Erregerspannung möglich, zum anderen kann hierfür auch der Spannungspegel auf den Leitungen CLOCK und DATA verwendet werden.

Im einzelnen sind im Schaltplan noch Dioden D1, D2, D3 und D4 dargestellt, es handelt sich hier um Eingangsschutzdioden für das E2Prom, welches noch einige passive Bauteile enthält. Ferner sind bei der Ankopplung an die Leitungspaare A und B Widerstände R1, R2, R3 und R4 vorhanden, über welche die Signale DATA und CLOCK auf die Leitungspaare aufgegeben werden. Über Widerstände R5, R6, R7 und R8 werden die Signale DATA und CLOCK für den Mikrocontroller aus den Signaladern A und B der Resolver-Signalleitung gewonnen. An der Auswerteinrichtung im Servoumrichter für die Resolversignale finden sich Kondensatoren C2, C3, C4 und C5, über welche die Wechselspannungsanteile der Resolver-signale in die Auswerteinrichtung eingeführt und entsprechen die für den Mikrocontroller bestimmten Gleichspannungsanteile abgekoppelt werden.

## Patentansprüche

1. Drehzahlsteuerbarer Drehstrommotor zum Betrieb an einem dazu passenden Frequenzumrichter,
**dadurch gekennzeichnet,**
**daß** der Motor einen Speicherbaustein aufweist, in welchem die für den Umrichter relevanten Motordaten abgelegt sind, und der Umrichter eine Datenauswerteinheit hat, die zum Auslesen des Speicherbausteins mit dem Motor über eine Datenleitung verbunden ist.

2. Drehstrommotor nach Anspruch 1,
**dadurch gekennzeichnet,**
**daß** er als Servomotor ausgeführt und mit einem Rotorlagegeber ausgestattet ist, über dessen Datenleitung zu einer Auswerteinrichtung im Umrichter die Kommunikation zwischen dem Speicherbaustein im Motor und der Datenauswerteinheit im Umrichter abgewickelt wird.

3. Drehstrommotor nach Anspruch 1 oder 2,
**dadurch gekennzeichnet,**
**daß** sein integrierter Speicherbaustein programmierbar ist.

4. Drehstrommotor nach Anspruch 2 oder 3,
**dadurch gekennzeichnet,**
**daß** der Rotorlagegeber ein in den Motor integrierter Resolver ist, in dessen Signalleitung zu der Auswerteinrichtung im Umrichter hin die zwischen dem Speicherbaustein im Motor und der Datenauswerteinheit im Umrichter auszutauschenden Daten als Gleichspannungssignale eingekoppelt werden, von denen die Wechselspannungsanteile der Resolversignale an der Auswerteinheit im Umrichter abgekoppelt werden.

5. Drehstrommotor nach Anspruch 4,
**dadurch gekennzeichnet,**
**daß** die Gleichspannungsversorgung des Speicherbausteins im Motor durch Gleichrichtung der Resolver-Erregungsspannung erfolgt.

6. Drehstrommotor nach einem der Ansprüche 1 bis 4,
**dadurch gekennzeichnet,**
**daß** die Gleichspannungsversorgung des Speicherbausteins im Motor über die Datenauswerteinheit erfolgt.
